(19) Europäisches Patentamt
European Patent Office
Office européen des brevets

(11) **EP 1 735 616 B1**

(12) **EUROPEAN PATENT SPECIFICATION**

(45) Date of publication and mention
of the grant of the patent:
**02.09.2009 Bulletin 2009/36**

(21) Application number: **05728189.1**

(22) Date of filing: **22.03.2005**

(51) Int Cl.:
*G01N 33/483* (2006.01)

(86) International application number:
**PCT/EP2005/003058**

(87) International publication number:
**WO 2005/093409 (06.10.2005 Gazette 2005/40)**

(54) **METHOD FOR THE IN VITRO DETERMINATION OF CELLULAR UPTAKE OF EXOGENOUS AND ENDOGENOUS SUBSTANCES USING NMR SHIFT AGENTS AND THE MAGIC ANGLE NMR TECHNIQUE**

VERFAHREN ZUR IN-VITRO-BESTIMMUNG DER ZELLULÄREN AUFNAHME EXOGENER UND ENDOGENER SUBSTANZEN UNTER VERWENDUNG VON NMR-VERSCHIEBUNGSAGENTIEN UND DER MAGISCHER-WINKEL-NMR-TECHNIK

PROCEDE DE DETERMINATION IN VITRO D'APPORT CELLULAIRE DE SUBSTANCES EXOGENES ET ENDOGENES AU MOYEN D'AGENTS DE DECALAGE PAR RESONANCE MAGNETIQUE NUCLEAIRE ET DE LA TECHNIQUE PAR RESONANCE MAGNETIQUE NUCLEAIRE A ANGLE MAGIQUE

(84) Designated Contracting States:
**AT BE BG CH CY CZ DE DK EE ES FI FR GB GR HU IE IS IT LI LT LU MC NL PL PT RO SE SI SK TR**

(30) Priority: **26.03.2004 EP 04007388**

(43) Date of publication of application:
**27.12.2006 Bulletin 2006/52**

(73) Proprietor: **Bracco Imaging S.p.A**
**20134 Milano (IT)**

(72) Inventors:
• **CALABI, Luisella,**
**Bracco Imaging SpA**
**I- 20134 Milano (IT)**
• **ALFIERI, Goffredo,**
**Bracco Imaging SpA**
**20134 Milano (IT)**
• **BIONDI, Luca,**
**Bracco Imaging SpA**
**I-20134 Milano (IT)**
• **DEMIRANDA, Mario,**
**Bracco Imaging SpA**
**20134 Milano (IT)**
• **PALEARI, Lino,**
**Bracco Imaging SpA**
**I-20134 Milano (IT)**

• **GHELLI, Stefano,**
**Bracco Imaging SpA**
**I-20134 Milano (IT)**

(74) Representative: **Poletti, Marco**
**Bracco Imaging S.p.A.**
**IP Department**
**Via XXV Aprile, 4**
**20097 San Donato Milanese (MI) (IT)**

(56) References cited:
**WO-A-00/13020**

• **CALABI LUISELLA ET AL: "Application of high-resolution magic-angle spinning NMR spectroscopy to define the cell uptake of MRI contrast agents." JOURNAL OF MAGNETIC RESONANCE (SAN DIEGO, CALIF. : 1997) JUN 2002, vol. 156, no. 2, June 2002 (2002-06), pages 222-229, XP004408028 ISSN: 1090-7807 cited in the application**
• **CALABI LUISELLA ET AL: "Application of 1H and 23Na magic angle spinning NMR spectroscopy to define the HRBC up-taking of MRI contrast agents." JOURNAL OF MAGNETIC RESONANCE (SAN DIEGO, CALIF. : 1997) SEP 2003, vol. 164, no. 1, September 2003 (2003-09), pages 28-34, XP000447493 ISSN: 1090-7807 cited in the application**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- FREDLUND E ET AL: "Metabolite profiles of the biocontrol yeast Pichia anomala J121 grown under oxygen limitation" APPLIED MICROBIOLOGY AND BIOTECHNOLOGY, vol. 64, no. 3, 5 November 2003 (2003-11-05), pages 403-409, XP002288455 ISSN: 0175-7598
- HUMPFER E ET AL: "Direct observation of resolved intracellular and extracellular water signals in intact human red blood cells using 1H MAS NMR spectroscopy." MAGNETIC RESONANCE IN MEDICINE : OFFICIAL JOURNAL OF THE SOCIETY OF MAGNETIC RESONANCE IN MEDICINE / SOCIETY OF MAGNETIC RESONANCE IN MEDICINE. AUG 1997, vol. 38, no. 2, August 1997 (1997-08), pages 334-336, XP001182273 ISSN: 0740-3194
- BOLLARD M E ET AL: "A study of metabolic compartmentation in the rat heart and cardiac mitochondria using high-resolution magic angle spinning <1>H NMR spectroscopy" FEBS LETTERS, ELSEVIER SCIENCE PUBLISHERS, AMSTERDAM, NL, vol. 553, no. 1-2, 9 October 2003 (2003-10-09), pages 73-78, XP004463455 ISSN: 0014-5793

## Description

### Field of the invention

The present invention relates to a method for the *in vitro* quantitative determination of the cellular uptake of exogenous or endogenous substances by means of magnetic resonance techniques.

Said method is particularly advantageous as it can be applied, substantially, to all types of samples including, for instance, human or animal cells, cells culture(s), tissue and organ cells, vegetal cells (including wood and fruits), part of trunks, leaves and food cells of both animal or vegetal origin.

### Abbreviations used in the description

For sake of clarity and conciseness, a list of the abbreviations/acronyms most frequently used within the present description is herewith enclosed.

| | |
|---|---|
| ASA | Aetilsalycilic acid |
| BMS | Bulk Magnetic Susceptibility |
| CA/s | Contrast Agent/Agents |
| CC/s | Cellular Compartment/Compartments |
| CC≠SA | Cellular compartment in which the SA is not present |
| CCSA | Cellular compartment in which the SA is present |
| CP-MAS | Cross Polarization Magic-Angle-Spinning |
| CSA | Chemical Shift Anisotropy |
| DDI | Dipole-Dipole Interaction |
| DSS | 2,2-dimethyl-2-silapentane-5-sulfonate |
| ENDO/s | Endogenous naturally occurring substance/substances |
| ESR | Electron Spin Resonance |
| EXO/s | Exogenous substance/substances |
| $EXO_o$ | EXO substance present in extra-cellular compartment |
| $EXO_i$ | EXO substance present in intra-cellular compartment |
| HRBC | Human Red Blood Cells |
| HR-MAS | High Resolution Magic-Angle-Spinning |
| LIS | Lanthanide Induced Shift |
| $LIS^{ENDO}$ | Lanthanide Induced Shift of Endogenous substance (signal/signals) |
| $LIS^{EXO}$ | Lanthanide Induced Shift of Exogenous substance (signal/signals) |
| $LIS_o$ | Lanthanide Induced Shift for substance in the extra-cellular compartment |
| $LIS_i$ | Lanthanide Induced Shift for substance in the intra-cellular compartment |
| MAS-NMR | Magic-Angle-Spinning Nuclear Magnetic Resonance |
| MECM | Multi-photon Excitation Confocal Microscopy |
| MR | Magnetic Resonance |
| NCT | Neutron Capture Therapy |
| PDT | Photodynamic Therapy |
| SA/s | Shift Agent/Agents |
| SEM | Scanning Electronic Microscope |
| $\rho^{ENDO}$ | [SA]/[ENDO], i.e. it represents the ratio: SA concentration to ENDO concentration |
| $\rho^{EXO}$ | [SA]/[EXO], i.e. it represents the ratio: SA concentration to EXO concentration |
| [ ] | molar concentration |
| [a] | molar concentration of substance a |

Bibliographic references included in the description by means of numbers in brackets are also reported in the paragraph entitled "References".

### Background of the invention

It is well-known in the art that the quantitative determination of cellular uptake may provide valuable data and information concerning, for instance, bio-availability, effectiveness, resistance and toxicity, of a variety of exogenous or endogenous substances.

In the field of cosmetics, for instance, the possibility of determining the cellular uptake by derma cells may provide important data for the development of new cosmetic products possessing high performance and low collateral effects.

In botanics, likewise, the determination of the cellular uptake of EXOs can be useful to assess the exposure of vegetables to dangerous chemical products and, also, to get information about their preservation and care (see, as an example, the determination of the cellular uptake of EXOs by the trees of the big forests).

When considering the medical field, in addition, this kind of determination is of utmost importance as it may provide important information for pharmaceutically active ingredients per se, for instance including effectiveness, bio-availability or toxicity thereof.

In this respect, cellular uptake represents one of the milestones on which the whole drug development process is based, starting from the identification of a lead compound, up to the final formulation of the drug ready for administration to human and/or animal beings.

Moreover, as cellular uptake may also concern compounds which are void of any pharmacological property per se but, once administered, specifically accumulate into human or animal cells, its measurement is particularly important also in the field of diagnostics wherein cellular uptake is closely related to tissue and/or organ specificity of the CAs being used.

According to this latter aspect, as tissue/organ specificity is usually connected with both effectiveness and toxicity of these CAs, the capability of obtaining reliable cellular-uptake measurements may represent the starting point for the development of new contrast agents able, for instance, to provide high contrast imaging at lower dosages.

Substantial analogous considerations apply for radio-sensitizers to be used in PDT and NCT.

Despite the fact that cellular uptake and organ uptake can be somehow confused, they relate to two different kinds of uptake.

In this respect, cellular uptake provides for the accumulation of a given substance in the intra-cellular compartment. As such, its determination effectively provides a mean to quantify the amount of said substance being entered into the cell.

On the other side, as organ uptake provides for the accumulation of a given substance in the organ as a whole, it does not correspond, or necessarily correspond, to the mean cellular uptake. This is because a given substance may accumulate into the organ, for instance in its extra-cellular compartments, as a consequence of possible binding effects or interactions with the molecules being present on the external layer of the cellular membrane.

From all of the above, there is the need of a robust and reliable method for the *in vitro* measurement or determination of the cellular uptake of exogenous or endogenous substances in a variety of samples.

In this respect, it should be clear to the skilled person that the said method should find general applicability and preferably rely on the quantitative determination of a given parameter directly linked to the cellular uptake per se, so as to provide a direct measurement of it.

In addition, it should not require sample manipulation so as to avoid as much as possible changes in the concentration of the species at equilibrium or modifications of the functionality of the cellular membrane and of its integrity.

According to our knowledge, the methods currently known in the art do not fulfil all of these requirements.

The known methods being used in the determination of the cellular uptake of exogenous or endogenous substances may be conveniently grouped into two main categories: those requiring sample treatment (group A) and those not requiring sample treatment (Group B).

Group A In principle, the methods belonging to this group can be used to measure the cellular uptake of all types of EXOs and ENDOs in any type of cell or tissue sample.

The said methods usually enable to determine the total content of a given substance without differentiating on how this same substance is partitioned in the various CCs.

These methods are based, essentially, on chemical and chemico-physical analytical techniques requiring a sample pre-treatment, aimed to separate the intra-cellular fluid from the rest of the sample, which may vary according to the technique being used and to the type of sample being tested.

Anyway, whichever the treatment is, it generally produces modifications of the cellular system with consequent changes in the concentration of the species present in the cellular compartments at equilibrium, and/or changes of the mechanisms governing the transport of substances across the cellular membrane. Despite any possible misleading result, these effects may thus contribute to render the sample under analysis no more representative of the reality.

When cells are cultured in liquid phrase, for instance, the pre-treatment may consist in the separation of the cells from the extra-cellular fluid by means of several washing steps and subsequent centrifugation. This treatment can dramatically change the concentrations at equilibrium and break cells, or a relevant portion of them, with consequent perfusion of the intra-cellular fluid, or part of it, into the extra-cellular compartment.

On the other hand, when cells are cultured on semisolid or solid matrix, an even worst situation can occur because of the vigorous treatment needed to free the cells from the matrix itself. Under these conditions, changes of the concentrations of the species at equilibrium and modifications of cellular membrane functionality and integrity, during sample preparation, are almost inevitable.

The above is even more evident in the case of cell agglomerates or strips of tissues wherein treatments may be particularly drastic and invasive as they are directed to obtain isolated cells through tissutal matrix destruction.

Because of the above drawbacks, the determination of the cellular uptake according to the methods of group A do not appear to provide a reliable representation of the cellular uptake occurred in the original, untreated sample.

Group B Despite the fat that these methods have the common advantage of not requiring the above sample treatments, they are applicable to a few specific substances only. In fact, if the EXO (or ENDO) under determination is a substance containing atoms different from those naturally occurring inside the cells, that is atoms other than hydrogen, carbon, nitrogen, sodium and the like, its concentration inside the cell may be determined by use of a Scanning Electronic Microscope combined with micro-analysis, according to known techniques. However, as most of EXOs and ENDOs are organic molecules, their cellular uptake cannot be measured in this way.

On the contrary, the cellular uptake of heavy metals including, for example, paramagnetic metals, free metal ions and metal complexes thereof, may be all determined by using this technique.

If the EXO is a paramagnetic metal complex, some known methods based on ESR spectroscopy (1) or MAS-NMR spectroscopy (2,3) may be used. When the paramagnetic metal is gadolinium, in particular, the cellular uptake measurement can be also derived from the enhancement of the contrast in MR imaging (4).

The above MAS-NMR technique has been applied to the determination of the permeability of human blood cells by Magnetic Resonance Imaging Contrast Agents (MRI-CAs), particularly polyamino polycarboxylic Gd based contrast agents. This method comprises the use of a lanthanide complex able to produce a clearly detectable lanthanide induced shift (LIS) and a very weak relaxation (line broadening) on NMR signals of intra- and extra-cellular water protons. The rationale for this method relies on the complete isostructurality between the Gd-contrast agents (CA), which intra- or extra-cellular concentration has to be determined, and the lanthanide complex acting as shift agents (LIS agent). In other words, as both CA and LIS agent are supposed to show a very similar behaviour (because of their isostructurality), the actual determinations of where the LIS agent is, i.e. its exact intra- or extra-cellular concentration, are deemed to substantially correspond to where the CA would be and to the CA intra- or extra-cellular concentration, respectively.

As formerly indicated, however, the above method only provides for the determination of the cellular uptake of paramagnetic complexes and, hence, it cannot be applied to the determination of any different substance.

If the EXO is a manganese compound, the cellular uptake measurement can be carried out through the observation of the line broadening of phosphorus signal in ATP $^{31}$P-NMR spectra (5).

If the EXO under examination provides for a fluorescent spectrum well distinguishable from those produced by naturally occurring substances, i.e. endogenous substances inside the sample, MECM technique (6,7) can be used. However, as ENDOs usually contain several organic chromophores, this technique may only find application in a limited number of situations.

In the case of some endogenous organic metabolites (11), water (12) and free metal ion substances, for instance Na+, K+, Li+ and the like, a method based on SAs and NMR techniques (8,9,10) has been used to measure the concentration ratio between intra- and extra-cellular content. Nevertheless, despite the fact that the said concentration ratio is known to be related to the cellular uptake, the above method cannot quantify the single compartmental concentration of these substances.

Moreover, as it does not imply the use of MAS technique, it is not able to address the problems related to the presence of Chemical shift anisotropy, Dipole-Dipole Interactions and BMS as well as problems deriving from any possible overlapping between nuclei signals normally occurring into biological samples and from an incomplete differentiation of the signal with respect to the spectrum base line, i.e. an incomplete "NMR visibility" of the signal.

From all of the above, it appears that the reliability of the obtained measures according to the methods of Group B is insufficient in most of the cases. Importantly, no standardized methodologies can be considered for the methods of group B as too many variables apply including, for instance, the nature of the sample, its handling and the substance under investigation.

Moreover, known *in vitro* methods of both groups A and B appear to be time consuming and thus imply high costs, mainly because of the huge amount of work needed for the tuning of the method and/or for sample preparation.

Alternative approaches for instance comprising the *in vivo* determination of cellular uptake have been also disclosed. In this respect, although *in vivo* data are currently considered the "gold standard", their reliability is not yet doubt-free as given experiments have shown relevant drawbacks due to long experimental times, high costs mainly due to animals stabling and handling and, also, ethical issues.

Therefore, there is still the need for a reliable and fast method of general applicability enabling the determination of the cellular-uptake for a wide number of substances, in a variety of samples.

**Summary of the invention**

We have now found a method for assessing the cellular uptake of exogenous or endogenous substances that, advantageously, does not present any of the aforementioned drawbacks.

Therefore, it is a first object of the present invention a method for the *in vitro* determination of cellular uptake of exogenous or endogenous substances in a cell sample, which method comprises:

A method for the *in vitro* determination of cellular uptake of exogenous or endogenous substances in a cell sample, which method comprises:

1) selecting a suitable shift agent (SA) and nucleus combination for the measurement of cellular uptake of the exogenous or endogenous substance under investigation, through MAS-NMR spectroscopy;

2) determining the cellular compartment/s (CC/s) in which said exogenous or endogenous substance distributes, through MAS-NMR spectroscopy, wherein determination is carry out by:

2a) acquiring the MAS-NMR spectrum of the *in vitro* sample containing the exogenous or endogenous substance under investigation and determining the marker$^{EXO}$ or marker$^{ENDO}$ signal/s;

2b) adding a suitable amount of the selected SA to the above *in vitro* sample, so as to induce a significant LIS of marker$^{EXO}$ or of marker$^{ENDO}$ signal/s, and re-acquiring the same MAS-NMR spectrum; and

2c) comparing the marker$^{EXO}$ or the marker$^{ENDO}$ signal/s of steps (2a) and (2b) and determining in which Cellular Compartment the exogenous or endogenous substance is present;

and

3) measuring the compartmental concentration of the said exogenous or

In the present description, unless otherwise provided, with the term cellular uptake of a given substance we intend the quantisation of the amount of substance entered into the cell, that is to say penetrated into the cell across the cell membrane, independently from its stay in one or more of the cellular compartments.

Unless otherwise indicated, the term "cellular compartment" is herewith intended to include every portion of the cell being delimitated by a membrane.

In the present description, unless otherwise provided, with the term exogenous substance we intend every substance not naturally occurring in a biological sample, that is to say not resulting from a natural biological process, also including pathological processes.

Non limiting examples of exogenous substances according to the invention may thus include exogenous organic substances and exogenous metals or metal ions which NMR signals can be observed.

Preferred exogenous substances according to the invention include, for instance, drugs for human and veterinary use, diagnostic and therapeutics agents, contrast agents for imaging techniques, radio-sensitizers for photodynamic and neutron capture therapy, pesticides including herbicides, fertilizers, food additives, preservatives, cosmetics, colorants, waste products, pollutants, and chemicals in general.

Even more preferred exogenous substances are drugs and therapeutic agents, contrast agents for imaging techniques, radio-sensitizers for photodynamic and neutron capture therapy, pesticides, fertilizers, food additives, colorants, waste products, pollutants, and cosmetics.

Unless otherwise indicated, in the present description the term endogenous substance includes every substance resulting from normal or pathological biochemical processes of cells and tissues. Non-limiting examples of endogenous substances according to the invention may thus include any compound from natural metabolic pathways such as, for instance, natural carbohydrates, urea, lactate, citrate, acetate, carbonate, malonate, choline, creatine, phosphate, piruvate and natural amino acids.

According to a preferred embodiment, the present invention relates to a method for the *in vitro* determination of cellular uptake of exogenous substances (EXOs).

The method of the invention enables the "non-invasive" measurement of the cellular uptake of a variety of substances in a wide range of *in vitro* samples, either in liquid or semisolid media, including strips of tissues or organs and even organs as a whole.

In the present description, unless otherwise provided, with the term "non-invasive" we rely to the fact that the *in vitro* sample is not treated or pre-treated or, alternatively, that any needed treatment or manipulation is particularly light and, hence, does not produce modifications of the concentration of the chemical species at equilibrium or modifications of the processes governing the cellular uptake.

As a result, the method of the invention presents the remarkable advantage that the sample maintains as intact all of its biological functionalities.

In addition, the measurement of a parameter directly linked to the absolute concentration of the analysed exogenous or endogenous substance in the different CCs guarantees high reliability and reproducibility of the obtained data, thus replacing the need for a large number of *in vivo* tests.

Moreover, the sensitivity of the measurements is the one typical for NMR spectroscopy: micromolar concentrations are required when medium strength magnetic fields are used and even sub-micromolar concentrations may suffice when high magnetic fields and cryogenic technology for probeheads are used. And also, NMR spectra can be acquired in few minutes and, in addition, the experimental conditions being first tuned for the cellular uptake of a given substance may be conveniently adopted for determining the cellular uptake of other substances. This is because the experimental conditions are mainly dependent from the type of sample under consideration and, to a lesser extent, from the type of substance being tested.

Accordingly, the method of the invention allows easy and fast measurements as well as a high level of standardization because, apart from not requiring complex sample treatment, it is based on a single technique that comprises MAS-NMR spectroscopy in combination with lanthanide SA.

For a better understanding of the invention, the following technical details are now given.

For ease of reference, they are specifically addressed to the exogenous substances (EXOs) only but they are applicable as well to the endogenous substances (ENDOs).

As formerly indicated, the method of the invention comprises applying the so-called MAS-NMR spectroscopy in combination with Shift agents (SAs).

With the term MAS-NMR spectroscopy we mean the totality of pulse sequences which can be utilized to acquire NMR spectra with probehead designed for NMR measures with sample in fast spinning at the so-called "Magic Angle".

The combined application of MAS-NMR spectroscopy, in particular, is the "tool" that consents an enlarged and, at the same time, efficacious use of the SAs as per the method of the invention to measure the cellular uptake of a wide range of substances, in a number of different *in vitro* samples, so making the method of the invention of general applicability.

The use of a SA for cellular uptake measurements, in fact, is based on and may only be advantageously applied when the signals of interest, corresponding to the given EXO (or

ENDO) in the intra- and extra- CCs, are both detectable and well separated, to allow a reliable measure of their areas wherein this means that no overlapping can exist. Moreover, the said signals must be due to the 100% of the EXO (or ENDO) in the sample.

This means that the whole signal has to be completely detectable, "visible", with respect the spectrum base line.

The combined use of MAS technique according to the method of the invention allows an almost total cancellation of CSA and DDI effects that are generally responsible of the strong line width broadening. Accordingly, it allows the registration of NMR spectra having very sharp line widths, that, as above said, is the condition for a successful enlarged use of a SAs, i.e., of the general applicability of the method of the invention.

Moreover, the use of MAS technique as per the present invention consents an almost complete reduction of the undetectable signal amount, that is to say of the "not visible"

NMR signal, so providing for an improved reliability of obtained results.

Importantly, according to the method of the invention the LIS effect of the EXO NMR signal is the consequence of the sole and direct interaction between SA and EXO, that is to say LIS effect only arises from a dipole-dipole interactions between SA and EXO and its magnitude decays with the square of the distance between SA and the substance interacting with it.

In other words, in the method of the invention the presence of the SA may only determine a shift of the NMR signal of a substance when this same substance is very close to the SA, i.e. when both EXO and SA stay in the same cellular compartment. In this case, the measured LIS is a quantity directly linked to the absolute concentration of the analysed EXO in the different CCs, and its value is proportional to the ratio between the EXO and

SA concentrations, hereinafter indicated as $\rho^{EXO}=[SA]/[EXO]$.

However, as the above equation, as said, correctly applies only when the observed LIS effect is only due to a direct dipole-dipole interactions occurring between SA and EXO staying in the same cellular compartment, it is necessary that any anisotropic component of Bulk Magnetic Susceptibility (BMS) must be totally cancelled.

As reported in the literature (13-16), in fact, BMS could give rise to LIS across the cellular membrane separating the different cellular compartments, i.e. a LIS effect would also exist between SA and EXO substances not staying in the same cellular compartment.

The use of MAS technique according to the method of the invention allows for a complete elimination of any anisotropic component of Bulk Magnetic Susceptibility shift and thus provides for an induced shift only when due to a direct interaction occurring between SA and EXO staying in the same CC.

Moreover, as above said, by means of MAS technique the NMR lineshape in biological samples results much sharper than that in spectra obtained without MAS, thus allowing for a better differentiation between signals and optimal detection of LIS induced by SA on the EXO signals.

From all of the above, after the addition of SA to the sample, the EXO NMR signals may remain unchanged or, alternatively, may undergo to LIS. Then, in the case of EXO unshifted signals, EXO itself stays in CCs not shared or anyway occupied by the SA; on the contrary, in the case of EXO shifted signals, EXO occupies the same CCs of SA. Based on that, a direct measurement of the cellular uptake of the EXO may be thus obtained.

Interestingly, whether unshifted and shifted EXO NMR signals exist in the same sample, the ratio between the areas of both signals directly provides for the distribution ratio of the EXO between the CCs, thus allowing a direct measurement of the EXO cellular uptake.

According to the method of the invention, step (1) above is carried out by:

a) identifying a set of possible SA candidates for said SA and nucleus combination, on the basis of the LIS produced on at least one NMR signal belonging to said EXO;

b) identifying a set of possible candidates for said SA, on the basis of the CC/s in which they distribute; and

c) selecting said SA and nucleus combination, on the basis of the information gathered from steps (a) and (b).

Step (a): selection of the shift agent

In principle, all of the substances containing a paramagnetic nucleus may suitably act as SA according to the method of the invention. Particularly preferred, however, are SA including a lanthanide metal ion.

Even more preferred are lanthanide complexes wherein the ligand is selected from the group consisting of: EDTA (ethylenediaminetetracetic acid); PCTA (3,6,9,15-tetraazabicyclo-[9.3.1]-pentadeca-1(15)11,13-triene-3,6,9-tris (methane phosphonic) acid); BOPTA ((4RS)-[4-carboxy-5,8,11-tris (carboxymethyl)-1-phenyl-2-oxa-5,8,11-triazatridecan-13-oic acid]) or derivatives thereof; DTPA (diethylenetriamine pentaacetic acid) or derivatives thereof; DOTA (1,4,7,10-tetraazocyclo-dodecane-N,N',N'',N'''-tetraacetic acid) or derivatives thereof; DO3A (1,4,7,10-tetra azacyclododecane-1,4,7-triacetic acid) or derivatives thereof; DOTP (1,4,7,10-tetraazacyclododecane-1,4,7,10-tetrakis (methane phosphonic) acid or derivatives thereof; ($[3\beta(R),5\beta,12\alpha]$-3-[[4-[bis[2-bis(carboxymethyl)amino]-ethyl]amino]-4-carboxy-1-oxobutyl]amino]-12-hydroxycholan-24-oic acid).

Preferred metal ions of the lanthanide group include: $Ce^{3+}$; $Pr^{3+}$; $Nd^{3+}$; $Pm^{3+}$; $Sm^{3+}$; $Eu^{3+}$; $Tb^{3+}$; $Dy^{3+}$; $Ho^{3+}$; $Er^{3+}$; $Tm^{3+}$; $Yb^{3+}$.

Step (a): selection of nucleus combination

When referring to nucleus combination and its selection we intend the most suitable nucleus, among those of the EXO substance, being capable of providing an easily detectable EXO NMR signal and an equally easily detectable induced shift on that signal, by the action of the SA. Accordingly, preferred nuclei as per the method of the invention, are those allowing an easy detection of the EXO NMR signal by use of MAS-NMR technique.

Usually, proton and phosphorous do not represent the better choice as $^1$H-NMR and $^{31}$P-NMR spectra of biological samples frequently show strong overcrowding and peaks overlapping, due to various interfering substances naturally occurring in the sample.

As an example, when exogenous substances under investigation are available in a suitable isotopically enriched form, preferred nuclei may thus include $^{13}$C and $^{15}$N.

More generally, however, preferred nuclei may include those which are not present in the natural biological samples such as fluorine-19, deuterium, and boron-11.

To identify the most suitable set of SAs and nuclei combination for the quantitative determination of the cellular uptake of a given EXO, the said EXO is dissolved in $D_2O$ and, by employing a variety of combinations of different SAs with different nuclei and by varying the ratio $\rho^{EXO} = $ [SA]/[EXO], $LIS^{EXO}$ signals are thus measured.

SAs and nuclei combinations inducing the largest $LIS^{EXO}$ signals are those most suitable for use with the EXO under investigation. Said largest $LIS^{EXO}$ signal/s, hereinafter referred to as marker$^{EXO}$ signal/s, has/have to be considered as preferred according to the invention.

Step (b): determination of [SA]$_{CC}$:

To carry out the method of the invention it is necessary to know with a high degree of precision, *at priori* or by experimental measures, the concentration of SA into the different Cellular Compartments (i.e., [SA]$_{CC}$).

If experimental measurements are required, any one of the methods known in the art and concerning paramagnetic complexes can be used (see, as a reference, any of the aforementioned methods listed in Group B).

When using the method based on MAS-NMR spectroscopy (2,3), in particular, all of the steps 1-3 of the method of the invention may be experimentally carried out by using this same technique.

Step (c): selection of the SA and nucleus combination.

In principle, suitable SA for measuring EXO cellular uptake should be able to induce the largest $LIS^{EXO}$ signal of at least one of the EXO NMR signals (the marker$^{EXO}$ signal). Although not mandatory, SAs distributing in one Cellular Compartment only have to be considered as preferred because allowing easy calculations. By combining the results obtained from previous steps (a) and (b) it is thus possible to select the optimal SA and nucleus combination. Frequently, however, the chosen combination may just represent the best compromise among the different indications resulting from steps (a) and (b).

According to the method of the invention, step (2) above is carried out by:

d) acquiring the MAS-NMR spectrum of the *in vitro* sample containing the EXO under investigation and determining the marker$^{EXO}$ signal/s;
e) adding a suitable amount of the selected SA to the above *in vitro* sample, so as to induce a significant LIS of marker$^{EXO}$ signal/s, and re-acquiring the same MAS-NMR spectrum; and
f) comparing the marker$^{EXO}$ signal/s of steps (d) and (e) and determining in which Cellular Compartment the EXO is present.

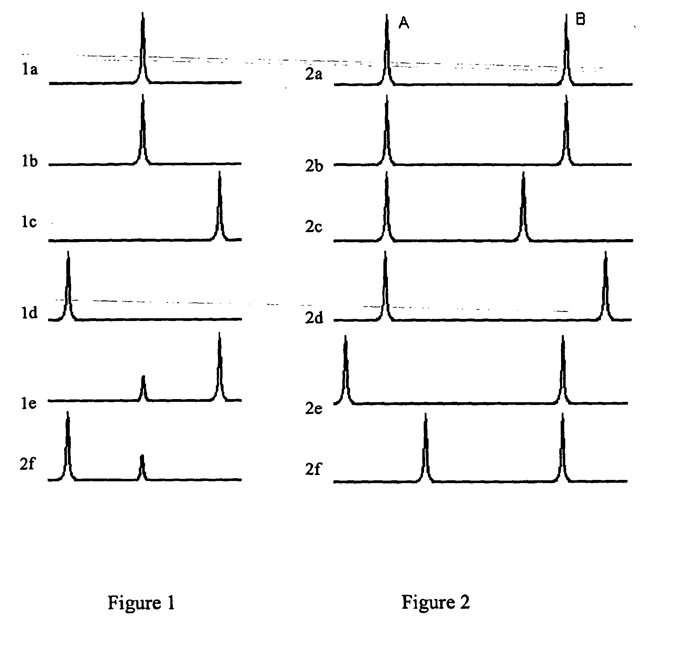

The MAS-NMR spectra can show different situations, as per the enclosed Figures 1-3 (a detailed explanation of all of the enclosed figures is also reported before the experimental section).

The use of a preferred SA staying in one of the CCs only is represented in Figures 1 and 2.

*Figure 1 - traces a - f.*

Trace a shows a marker$^{EXO}$ signal (in this case it is a single, one component signal) recorded in the absence of SA.

Following the addition of SA:

- the marker$^{EXO}$ signal remains unchanged (trace b). In this case all of EXO stays in a CC different from that in which SA stays, i.e. all of the EXO is $EXO_{CC \neq SA}$;
- the marker$^{EXO}$ signal remains as a single peak but shifts with respect to the original position (traces *c* or *d*). In this case the EXO and SA stay in the same CC, i.e. all of the EXO is $EXO_{CCSA}$;
- the marker$^{EXO}$ signal splits in at least two components (traces *e* or *f*). The EXO corresponding to the shifted signal is $EXO_{CCSA}$ whilst the EXO corresponding to the unshifted signal is $EXO_{CC \neq SA}$. The ratio between the areas of the two signals is proportional to the ratio between $[EXO_{CCSA}]$ and $[EXO_{CC \neq SA}]$.

It is worth noting that situations corresponding to trace e or f may appear as per the situation of trace b. This may happen when the LIS of marker$^{EXO}$ signal is too small, i.e. insufficient to separate the $EXO_{CCSA}$ signal from the one due to the $EXO_{CC \neq SA}$.

Therefore, in the case of spectra like the one of trace b, it may be convenient to add an additional amount of SA to the sample, so as to check the optional existence of two or more overlapping signals.

*Figure 2 - traces a - f.*

Trace *a* shows a marker$^{EXO}$ signal having two (or many) components, in the absence of SA. These components may be due to the presence of the EXO in different CCs or to the fact that the EXO has two marker$^{EXO}$ signals, for example as a consequence of two different chemical specie such as isomers or conformers, or because of the possible interaction with endogenous substances, membrane and the like.

Following the addition of SA:

- each marker$^{EXO}$ signal remains unchanged (trace b). In this case the EXO stays in CCs different from that where SA stays, i.e. all of the EXO is $EXO_{CC \neq SA}$;
- some marker$^{EXO}$ signals remain unchanged whilst other shift: signal A shifts while signal B remain unchanged (trace *c* and *d*) or vice-versa (traces *e* and *f*). In this case the shifted signals correspond to $EXO_{CCSA}$ whilst the other correspond to $EXO_{CC \neq SA}$;
- all of the marker$^{EXO}$ signals shift. In this case all of the EXO is $EXO_{CCSA}$.

It is worth noting that situations corresponding to trace *c-f* may appear as per the situation of trace *b*. This may happen when the LIS of marker$^{EXO}$ signal is too small, i.e. insufficient to separate the $EXO_{CCSA}$ signal from the one due to the $EXO_{CC \neq SA}$.

Therefore, in the case of spectra like the one of trace *b*, it may be convenient to add an additional amount of SA to the sample, so as to check the optional existence of two or more overlapping signals.

From all of the above, if in step (b) it has been established that SA only stays in the extra-cellular compartment (o), it is possible to affirm that $EXO_{CCSA} = EXO_O$ and $EXO_{CC \neq SA} = EXO_i$ . Vice-versa, if in step (b) it has been found that SA only stays in the intra-cellular compartment (i), it is possible to affirm that $EXO_{CCSA} = EXO_i$ and $FXO_{CC \neq SA} = EXO_O$.

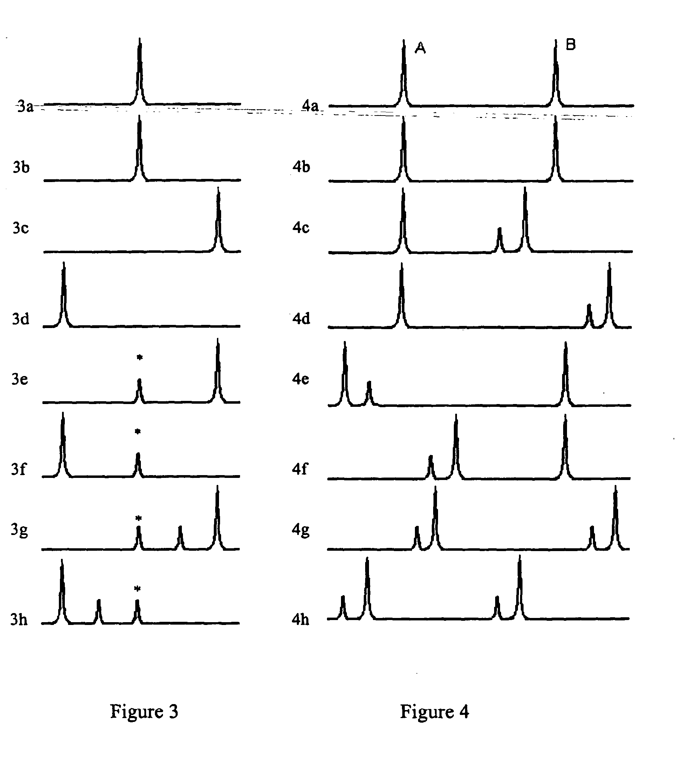

The use of a preferred SA being shared among many compartments is reported in figures 3 and 4.

*Figure 3 - traces a - h.*

Trace *a* shows a marker$^{EXO}$ signal, showing only one component, in the absence of SA. Following the addition of SA:

- the marker$^{EXO}$ signal remains unchanged (trace *b*). In this case the EXO stays in one or more CC/s anyway different from the one where SA stays. The EXO is all $EXO_{CC \neq SA}$;
- the marker$^{EXO}$ signal shifts (traces *c - d*). In this case the EXO is all $EXO_{CCSA}$; and SA stays in one CC only (or in different CCs in case marker$^{EXO}$ are isochronous);
- the marker$^{EXO}$ signal shifts and the peak marked with an asterisk (*) remains unshifted (traces *e -f*). In this case the shifted signals correspond to $EXO_{CCSA}$ and signal (*) correspond to $EXO_{CC \neq SA}$;
- the marker$^{EXO}$ signal splits into two or more components and peak (*) remains unshifted (traces *g - h*). In this case the shifted signals correspond to $EXO_{CCSA}$ and signal (*) corresponds to $EXO_{CC \neq SA}$.

*Figure 4 - traces a - h.*

Trace *a* shows a marker$^{EXO}$ signal showing two (in general many) components in the absence of SA.
Following the addition of SA:

- the marker$^{EXO}$ signals remain unchanged (trace b). In this case the EXO stays in one or more CC different from that where SA stays. The EXO is all $EXO_{CC \neq SA}$;
- one signal remains unchanged whilst the other shifts (trace *c, d, e, f*). It may also occur that the shifted signal splits into two or more components. The shifted signals correspond to $EXO_{CCSA}$ and the unshifted signal corresponds to $EXO_{CC \neq SA}$;
- all of the signals shift (trace *g, h*). In this case all of the EXO is $EXO_{CCSA}$.

Since the CCs where SA distributes are known, upon comparison between the marker$^{EXO}$ signal/s in the absence and in the presence of SA, the CC/s where EXO stays may be also determined.
The determination of the EXO compartmental concentration as per step (3) of the method of the invention is carried out according to the following possible situations.

- if all of the EXO is $EXO_{CC \neq SA}$ (as per Figures 1*b*; 2*b;* 3*b;* 4*b*), [$EXO_{CC \neq SA}$] is obtained by considering the amount of EXO being added to the sample and the volume of the CC where EXO stays [CC is known from former step (b)].

The values of [$EXO_{CC \neq SA}$] may also be determined by use of the equation $\rho^{EXO} = [SA]/[EXO]$, because $[SA]_{CC}$ can be known. The value of $\rho^{EXO}$ may be determined trough the graph of $LIS^{EXO}$ vs. $\rho^{EXO}$. From [$EXO_{CC \neq SA}$], by knowing the volume of the CC, the amount of $EXO_{CC \neq SA}$ may be obtained.
The said graph can be obtained by acquiring a series of MAS-NMR spectra of the known EXO under investigation in a medium as similar as possible to the one of the *in vitro* sample such as, for instance, a physiological solution or plasma, and by using different known [SA]. At each variation of [SA]/[EXO], $LIS^{EXO}$ signal is then measured.

- if all of the EXO is $EXO_{CCSA}$ and SA stays in one CC only (as per Figures 1*c*; 1*d*; 2*c*; 2*d*), the two methods just disclosed for the determination of [$EXO_{CC \neq SA}$] may also be suitably applied for the determination of [$EXO_{CCSA}$] and the amount of $EXO_{CCSA}$.
- if EXO is partitioned as $EXO_{CCSA}$ and $EXO_{CC \neq SA}$, SA stays in one CC only (as per Figures 1*e*; 1*f*; 2*e*; 2*f*) and the amount of EXO added to the sample is known, the ratio between the area of the peaks, corresponding to $EXO_{CCSA}$ and $EXO_{CC \neq SA}$, just supplies the ratio [$EXO_{CCSA}$]/[$EXO_{CC \neq SA}$]. In this case, if the volume of at least one of the CCs is know, the amounts of [$EXO_{CCSA}$] and [$EXO_{CC \neq SA}$] result thus determined. On the contrary, if CCs volumes are not know, [$EXO_{CCSA}$] can be determined as described in the previous case, by using $LIS^{EXO}$ signal vs. $\rho^{EXO}$ and, consequently, also [$EXO_{CC \neq SA}$] results to be determined.
- if EXO and SA distribute into more than one CC (as per Figures 3*c*-3*h*; 4*c*-4*h*), the possibility of determining all of the EXO compartmental concentrations may require additional stoichiometric calculations which complexity may vary for the different situations, depending from the availability of some or all of the CC volumes and the number of CCs where SA and EXO distribute. In any case, by means of $LIS^{EXO}$ signal vs. $\rho^{EXO}$ graph, the values of the EXO compartmental concentrations can be calculated. To sum up, step (3) of the method of the invention is carried out by taking into account the CC/s where EXO stay, the volume/s of said CC/s, the value/s of the area/s under the marker$^{EXO}$ signal/s, the calculated $\rho^{EXO}$ for every CC in which EXO stays, and by solving the system of equations connecting these parameters.

This situation is disclosed, in more details, in the subsequent experimental section (see example 1).

The method of the invention may be advantageously used in a variety of fields such as, for insctance:

- in medicine, for the screening of bio-availability, effectiveness, resistance and toxicity of exogenous substances including, for example, drugs for human and veterinary use, diagnostic contrast agents and radio-sensitizer for photodynamic and neutron capture therapy as well as in diagnosis and care of diseases and in drugs therapy follow-up and o for the study of metabolism related to pathologies and thereof care.
- in the pharmacological field, for the screening and development of drugs starting, for example, from the identification of a lead compound up to the final formulation of the drug;
- in toxicology, to assess the cellular uptake and, hence, the exposure to chemicals, in particular of pesticides, fertilizer, pollutants and waste products;
- in the consumer field, to determine the cellular uptake of exogenous substances such as, food additives, artificial colourings and preservatives;
- in cosmetics, to determine the cellular uptake of compounds by derma cells and, more in general, for the development of new products endowed with better performance and lower collateral effects;
- in diagnostics, to assess the tissue and/or organ specificity of the used CAs wherein said values are usually connected both with effectiveness and toxicity of these substances;
- in pharmacokinetics, to assess and study the kinetic parameters governing the cellular uptake;
- in botanics, to determine the exposure of vegetables to dangerous chemical products and, also, in the preservation and care of the vegetables themselves.

## Explanation of the figures

Figures 1 to 4 represent MAS-NMR spectra as per the method of the invention, in a variety of situations. More in particular,

Figure 1     represents a marker$^{EXO}$ signal showing a single peak in the absence of SA. Trace *a*: spectrum in the absence of SA; trace *b - f*: spectra in the presence of SA staying in one CC only.

Figure 2     represents a marker$^{EXO}$ signal showing more than one peak, in the absence of SA. Trace *a*: spectrum in the absence of SA; trace *b - f*: spectra in the presence of SA staying in one CC only.

Figure 3     represents a marker$^{EXO}$ signal showing a single peak, in the absence of SA. Trace *a*: spectrum in the absence of SA; trace *b -h*: spectra in the presence of SA staying in more than one cellular compartments.

Figure 4     represents a marker$^{EXO}$ signal showing more than one peak, in the absence of SA. Trace *a:* spectrum in the absence of SA; trace *b - h:* spectra in the presence of SA staying in more than one cellular compartments.

Figure 5     represents the $^1$H NMR spectrum of acetylsalicylic acid in $D_2O$.

Figure 6     represents the graph of $LIS^{ACETYLSALICYLIC\ ACID}$ vs. $\rho^{ACETYLSALICYLIC\ ACID}$ = [Dy-BOPTA]/[ACETYLSALICYLIC ACID]

Figure 7     represents the $^1$H MAS-NMR spectrum of acetylsalicylic acid in HRBC suspension. *Trace a:* spectrum of HRBC; *trace b:* same sample of trace *a* but after addition of acetylsalicylic acid (100 $\mu$l, 1M stock solution); *trace c*: same sample of trace *b* but after addition of Dy-BOPTA (80 $\mu$l, 0.1M stock solution).

## EXPERIMENTAL SECTION

With the aim of better illustrating the present invention, without posing any limitation to it, the following examples are now given.

## Example 1 **(theoretical)**

A given SA distributes into three different CCs (hereinafter named as CC1, and CC2) and three shifted marker$^{EXO}$ signals exist. The values of $[SA_{CC1}]$ $[SA_{CC2}]$ are known from previous step (b) of the method of the invention.

From NMR-MAS spectra the values of $LIS^{EXO}_{CC1}$, and $LIS^{ExO}_{CC2}$ signals can be measured and by the graphs of $LIS^{EXO}$ signal vs. $\rho^{EXO}$, the corresponding values of $\rho^{EXO}_{CC1}$, $\rho^{EXO}_{CC2}$, are obtained. Moreover, the areas $A_1$ and $A_2$ of the two marker$^{EXO}$ signals can be measured by integration of the NMR spectrum. Being $[SA_{CC}]$ known, it is possible to determine the $[EXO_{CC}]$ by the following set of equations:

$$[\text{EXO}_{CC1}] = [\text{SA}_{CC1}] / \rho^{EXO}{}_{CC1}$$

$$[\text{EXO}_{CC2}] = [\text{SA}_{CC2}] / \rho^{EXO}{}_{CC2}$$

$\left.\right\}$ equation set no. 1

$$[\text{EXO}_{CC1}] / [\text{EXO}_{CC2}] = A_{CC1} / A_{CC2}$$

$$[\text{EXO}_{CC1}] / [\text{EXO}_{CC3}] = A_{CC1} / A_{CC3}$$

$\left.\right\}$ equation set no. 2

To solve the system, it is necessary to calculate all of the possible combinations and verify which [EXOs] are congruent with both sets of equations **1** and **2**.

To better clarify what above reported, this same example is also expressed through numerical values.

Let us suppose to have the compartmental distribution reported in Table 1 and to label the two different compartments as 1 and 2. The experimental data are:

- from the measured LIS: $\rho_1 = 0.02$; $\rho_2 = 0.093$

- from previous step (b): $[\text{SA}_{CC1}] = 0.2$; $[\text{SA}_{CC2}] = 1.4$;

- from MAS-NMR spectra calculation of the areas provides for:

- $A_1 = 100$; $A_2 = 150.66$

From these values it is possible to calculate (by equation set 1) all of the possible values of $[\text{SA}_{CC}]/\rho^{EXO}$ i.e. $[\text{EXO}_{CC}]$, in the three compartments (see values reported in Table 2).

From these [EXOs] values it is possible to calculate all of the values of the left terms of equation set 2, for all of the possible combinations (see data reported in Table 3). Then, it is possible to calculate the right terms of equation set 2, for all of the possible combinations, by using the experimental values of the signal areas (see data reported in Table 4).

Table 1

|  | **SA** | **EXO** | $\rho$ | **signal area** |
|---|---|---|---|---|
| **[SA$_{CC1}$]** | 0.2 | 10 | 0.02 | 100 |
| **[SA$_{CC2}$]** | 1.4 | 15 | 0.093 | 150 |
| Total added mM of SA = 1.6, total added mM of EXO = 25. | | | | |

Table 2

|  | [SA$_{CC1}$] | [SA$_{CC2}$] |
|---|---|---|
| $\rho_1$ | [EXO$_{CC1}$] = 10.00 | [EXO$_{CC2}$] = 70.00 |
| $\rho_2$ | [EXO$_{CC1}$] = 2.15 | [EXO$_{CC2}$] = 15.00 |

Table 3

| [EXO$_{CC1}$]/[EXO$_{CC2}$] | 0.14 | **0.67** |
|---|---|---|
|  | 0.03 | 0.14 |

Table 4

|       | $A_1$ | $A_2$ |
|-------|-------|-------|
| $A_1$ | --    | 1.50  |
| $A_2$ | **0.67** | --    |

The value reported in Tables 3 which fit with this in Table 4, are highlighted in bold characters. They correspond to:

$[EXO_{C1}]/[EXO_{C2}]$ = **0.67** obtained by $[EXO_{C1}]$=10 and $[EXO_{C2}]$ =15
$A_1/A_2$ = **0.67** obtained by $A_1$ = 100 and $A_2$ = 150
therefore: $[EXO_{C1}]$=10; $[EXO_{C2}]$ = 15;
$A_{C1}$ = 100; $A_{C2}$ = 150

Accordingly, the solution of the system has allowed the calculation of the values of $[EXO_{CC1}]$ and $[EXO_{CC2}]$.

**Example 2**

**Determination of cellular uptake of acetylsalicylic acid in red blood cells**

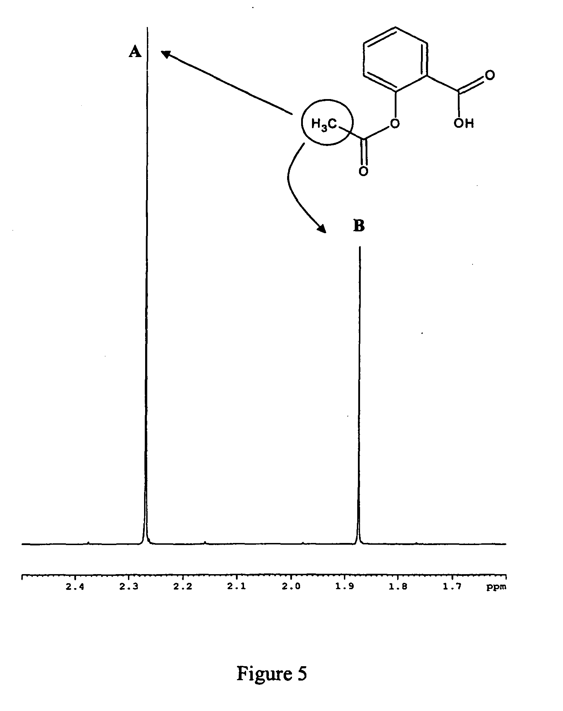

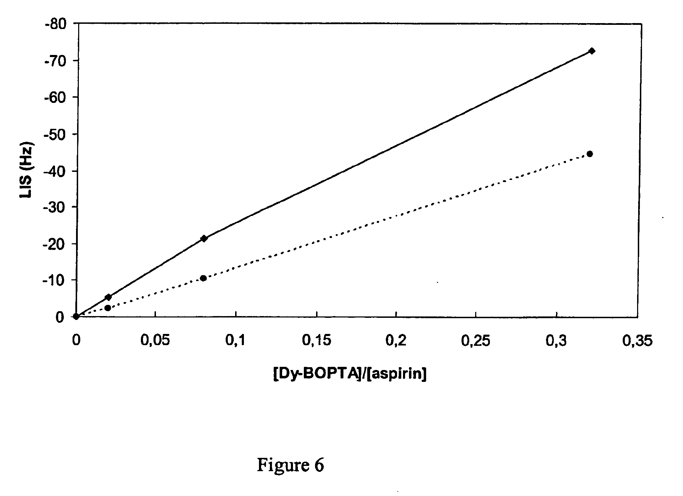

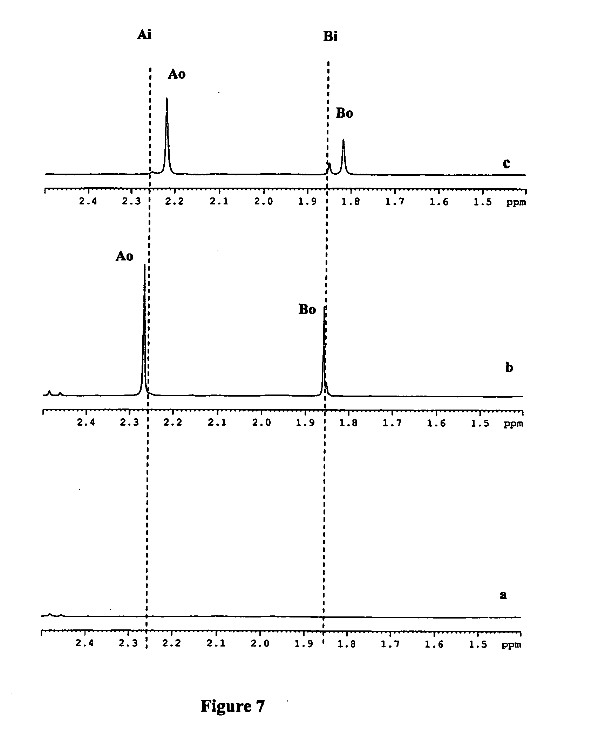

In this example, EXO = Acetylsalicylic acid; SA = Dy-BOPTA (Dy is the symbol of Dysprosium, one of the lanthanides known as shift agent).
The nucleus used to determine Acetylsalicylic acid cellular uptake is the proton.
The *in vitro* determination has been performed on HRBC obtained by human blood treated as described below.
Centrifugation: the employed centrifuge was HERAEUS SEPATECH OMNIFUGE 2 ORS, rotor model 3360. Centrifugation was done at 2109 g (equivalent to 3500 rpm) at 4°C for 15 minutes.
Living HRBC preparation: human blood (to which sodium citrate has been added as an anticoagulant) was centrifuged. After that, HRBC pellets were separated from serum and white cell interface, carefully obtaining a solution of red cells free of white cells; accordingly, red cells with 80% hematocrit were obtained.
Dy-BOPTA stock solution: a 0.1 M stock solution of Dy-BOPTA was used in all of the measurement to obtain the suitable [SA].
Acetylsalicylic acid stock solution: a 1M stock solution of ASA containing 0.1 M of DSS (as internal standard for quantitative determination), was used in all of the measurements.
The solution was prepared by dissolving 180.16 mg of ASA and 23,63 mg of DSS in 200ul of H2O, adding NaOH 2N until dissolution, lowering, if necessary, the pH to 7 with HCl 1N, then filling the volume to 1 ml. In this way two forms of ASA are generated that are below indicated as A and B.
Acetylsalicylic acid in HRBC: a sample containing 1 ml of HRBC (80% hematocrit), 100 $\mu$moles of acetylsalicylic acid (i.e. 100 $\mu$l of acetylsalicylic acid stock solution) and 8 $\mu$moles of Dy-BOPTA (i.e. 80 $\mu$l of Dy-BOPTA stock solution) was employed to measure the uptake of acetylsalicylic acid in HRBC.
Proton $^1$H NMR spectra: all the $^1$H NMR spectra have been aquired on a Bruker AMX 600 SB spectrometer at the frequency of 600.13 MHz. A multinuclear HR-MAS probehead with double bearing and 4 mm rotor with 12 $\mu$l spherical insert have been employed. Experimental conditions were: sample rotating speed = 3500 Hz; spectra width =12,000 Hz (c.a. 20 ppm); time domain data points = 128 K; number of scans = 16; pulse length = 11.7 $\mu$s; recycle delay = 10 s; CPMG sequence ; Fourier Transform by 0.5 Hz of enhancement multiplication function, sample temperature = 25°C.
Dy-BOPTA employed in the present experiment has been selected from other Dysprosium chelates as preferred SA because it is known from the literature that it does not penetrate into HRBC (2).
Proton spectra have been employed to determine acetylsalicylic acid cellular uptake, because $^1$H is the sole nucleus present in acetylsalicylic acid having a high NMR sensitivity. The $^1$H NMR spectra of acetylsalicylic acid in water showed two signals (A and B), in correspondence to the methyl group, as per the enclosed Figure 5. This case is similar to the one shown in Figure 2 trace *a*. Both of the two signals are marker[EXO] signals.
The calculated graph of LIS[ACETYLSALICYLIC ACID] vs. $\rho$[ACETYLSALICYLIC ACID] = [Dy-BOPTA]/[ACETYLSALICYLIC ACID] is reported in Figure 6, for both the marker[EXO] signals.
The measurement of cellular uptake of acetylsalicylic acid by HRBC was calculated from the spectra reported in the enclosed Figure 7.
Firstly, the $^1$H NMR-MAS spectrum of HRBC was aquired (Figure 7 - trace *a*) in the absence of either acetylsalicylic acid (EXO) or of Dy-BOPTA (SA).

Then, 100 µl of acetylsalicylic acid 1M stock solution were added and the spectrum repeated (Figure 7 - trace *b*). In spectrum of *trace b* the two components for each signal A and B of the methyl group of acetylsalicylic acid were well visible, i.e. four peaks exist in the proton MAS-NMR spectrum. The splitting of signals A and B induces to suppose that the molecules of acetylsalicylic acid in the extra- and intra-cellular compartments are in magnetically different environments, i.e. the four observed signals corresponded to signals

A e B into intra- and extra-cellular compartments, respectively.

Lastly, 80 µl of Dy-BOPTA stock solution were also added to the sample and the spectrum were again re-aquired (Figure 7 - *trace c*). At this time the four peaks showed a larger difference in their chemical shift with respect to *trace b*. Two components resulted unshifted with respect to the original marker$^{EXO}$ signals while the other two components were shifted.

Acetylsalicylic acid corresponding to the unshifted marker$^{EXO}$ signals is

ACETYLSALICYLIC ACID$_{CC \neq SA}$, i.e. acetylsalicylic acid in the intra-cellular compartment.

On the contrary, acetylsalicylic acid corresponding to the shifted marker$^{EXO}$ signals is ACETYLSALICYLIC ACID$_{CCSA}$, i.e. acetylsalicylic acid in the extra-cellular compartment.

The ratio between the areas of the two sets of peaks, directly gives the ratio between acetylsalicylic acid in the two cellular compartments for each type A and B. Since the volume of the two cellular compartments can be calculated, it is possible to obtain the absolute amounts of acetylsalicylic acid in the two cellular compartments.

Data:

Peak area of marker$^{EXO}$(A)$_i$ = 5.84
Peak area of marker$^{EXO}$(A)$_o$ = 88.28
Peak area of marker$^{EXO}$(B)$_i$; = 11.13
Peak area of marker$^{EXO}$(B)$_o$ = 45.50
Volume of intracellular fluid = 0.8 ml
(because 1 ml of HRBC with 80% hematocrit were used)
Volume of extracellular fluid = 0.2 ml + 0.1 ml + 0.08 ml = 0.38 ml
(0.2 ml = extracellular fluid in HRBC; 0.1 ml = volume of added acetylsalicylic acid solution; 0.08 ml = volume of added SA solution)
Total of added acetylsalicylic acid = 100 µmoles

Calculations are the following:

µmoles acetylsalicylic acid$_i$(A) = 5.84 x 100/(5.84+88.28+11.13+45.50) = 3.87
µmoles acetylsalicylic acid$_o$(A) = 88.28 x 100/(5.84+88.28+11.13+45.50) = 58.56
µmoles acetylsalicylic acid$_i$(B) = 11.13 x 100/(5.84+88.28+11.13+45.50) = 7.38
µmoles acetylsalicylic acid$_o$(B) = 45.50 x 100/(5.84+88.28+11.13+45.50) = 30.19
concentration of acetylsalicylic acid$_i$(A) = 3.87 / 0.8 = 4.83 mM
concentration of acetylsalicylic acid$_o$(A) = 58.56 / 0.38 = 154.10 mM
concentration of acetylsalicylic acid$_i$(B) = 7.38 / 0.8 = 9.22 mM
concentration of acetylsalicylic acid$_o$(A) = 30.19 / 0.38 = 79.44 mM
[acetylsalicylic acid]$_o$/ [acetylsalicylic acid]$_i$(A) = 154.10 / 4.83 = 31.90
[acetylsalicylic acid]$_o$/ [acetylsalicylic acid]$_i$(B) = 79.44 / 9.22 = 8.61

From all the above, the cellular uptake of the acetylsalicylic acid is:

% of cellular uptake of acetylsalicylic acid A = 4.83 x 100 / (4.83 + 154.10) = 3.04 %
% of cellular uptake of acetylsalicylic acid B = 9.22 x 100 / (9.22 + 79.44) = 10.40 %
% of cellular uptake of total acetylsalicylic acid = (4.83 + 9.22) / (4.83 + 154.10 + 9.22 + 79.44) = 5.67 %

**Bibliographic References**

1. Zaplatin N., Baker K. A., Kleinhans. F. W., Effectiveness and Toxicity of Several DTPA Broadening gents for Biological ESR Spectroscopy, J. Magn. Res. Ser. B 110, 249 - 254 (1996).

2. Calabi L., Alfieri G., Biondi L., De Miranda M., Paleari L., Ghelli S. - Application of high resolution magic angle spinning NMR spectroscopy to define the cell up-taking of MRI Contrast Agents J. Magn. Reson. 156, 222-229 (2002).

3. Calabi L., Paleari L., Biondi L., Linati L., De Miranda M., Ghelli S., Application of 1H and 23Na Magic Angle Spinning NMR Spectroscopy to define the HRBC up-taking of MRI contrast agents, accepted on J. Magn. Reson. 164, 28-34 (2003).

4. Artemov D, Solaiyappan M, Bhujwalla ZM, Magnetic resonance pharmacoangiography to detect and predict chemotherapy delivery to solid tumors, Cancer Res 61:7, 3039-44 (2001).

5. Colet J. M., Vander Elst L, Muller RN, Dynamic evaluation of the hepatic uptake and clearance of manganese-based MRI contrast agents: a 31P NMR study on the isolated and perfused rat liver. J Magn. Reson. Imaging 8:3 663-9 (1998).

6. Chirico G., Cannone F., Olivini F., Beretta S., Baldini G., Diaspro A., Robello M., "A combined confocal and spectroscopic TPE architecture for the identification of single fluorescent molecules", SPIE proc., Multiphoton Microscopy in the Biomedical Sciences, A. Periasamy, P.T.C. So, Eds., vol.4262, p.407-413 (2001).

7. Chirico G., Cannone F., Beretta S., Baldini G., Diaspro A., "Single Molecules Studies By Means Of The Two-Photon Fluorescence Distribution", Microsc.Res.Tech., (2001) 55:359-364.

8. Degani H., Elgavish G. A., Ionic Permeabilities of Membranes, FEBS Lett. 90(2), 357-360 (1978).

9. Gupta R. K., Gupta P., Direct Observation of Resolved Resonances from Intra- and Extracellular Sodium-23 Ions in NMR Studies of Intact Cells and Tissues Using Dysprosium(III)tripoly phosphate as Paramagnetic Shift Reagent, J. Magn. Reson. 47, 344- 350 (1982).

10. Miller S. K., Chu W. J., Pohost G. M., Elgavish G. A., Improvement of Spectral Resolution in Shift-Reagent-Aided 23Na NMR Spectroscopy in the Isolated Perfused Rat Heart System, Magn. Reson. Med. 20, 184-195 (1991).

11. Aime S, Botta M, Mainero V, Terreno E., Separation of intra- and extracellular lactate NMR signals using a lanthanide shift reagent. Magn Reason Med 47:1 10-3 (2002).

12. Humpfer E., Spraul M., Nicholson A. W., Nicholson J. K., and Lindon J. C., Direct Observation of Resolved intra- and extracellular Water Signals in Intact Human Red Blood Cells Using 1H MAS NMR Spectroscopy, Magn. Res. Med. 38, 334 - 336 (1997).

13. Springer C. S. Jr., Physicochemical Principles Influencing Magnetopharmaceuticals in "NMR in Physiology and Biomedicine" (R.J. Gillies, ed.), pp. 75-99, Academic Press Inc., Orlando (1994).

14. Live D. H., and Chan S. I., Bulk Susceptibility Corrections in Nuclear Magnetic Resonance Experiment Using Superconducting Solenois, Anal. Chem. 42(7), 791-792 (1970).

15. Pályka, W. Huang, and C. S. Springer Jr., The Effects of Bulk Magnetic Susceptibility in NMR, Bull. Magn. Reson. 17,46 - 53 (1995).

16. Shachar-Hill Y., Berfroy D. E., Pfeffer P. E., and Ratcliffe R. G., Using Bulk Magnetic Susceptibility to Resolve Internal and External Signals in the NMR Spectra of Plant Tissues, J. Magn. Reson. 127,17- 25 (1997).

## Claims

1. A method for the *in vitro* determination of cellular uptake of exogenous or endogenous substances in a cell sample, which method comprises:

   1) selecting a suitable shift agent (SA) and nucleus combination for the measurement of cellular uptake of the exogenous or endogenous substance under investigation, through MAS-NMR spectroscopy;
   2) determining the cellular compartment/s (CC/s) in which said exogenous or endogenous substance distributes, through MAS-NMR spectroscopy, wherein determination is carry out by:

2a) acquiring the MAS-NMR spectrum of the *in vitro* sample containing the exogenous or endogenous substance under investigation and determining the marker$^{EXO}$ or marker$^{ENDO}$ signal/s;

2b) adding a suitable amount of the selected SA to the above *in vitro* sample, so as to induce a significant LIS of marker$^{EXO}$ or of marker$^{ENDO}$ signal/s, and re-acquiring the same MAS-NMR spectrum; and

2c) comparing the marker$^{EXO}$ or the marker$^{ENDO}$ signal/s of steps (2a) and (2b) and determining in which Cellular Compartment the exogenous or endogenous substance is present; and

3) measuring the compartmental concentration of the said exogenous or endogenous substance.

**2.** A method according to claim 1 wherein step 1) is carried out by:

1a) identifying a set of possible SA candidates for said SA and nucleus combination, on the basis of the LIS produced on at least one NMR signal belonging to said exogenous or endogenous substance;

1b) identifying a set of possible candidates for said SA, on the basis of the CC/s in which they distribute; and

1c) selecting said SA and nucleus combination, on the basis of the information gathered from steps (1a) and (1b).

**3.** A method according to claim 1 for the in vitro determination of cellular uptake of exogenous substances.

**4.** A method according to claim 3 wherein the exogenous substance is any substance not naturally occurring in a biological sample.

**5.** A method according to claim 4 wherein the exogenous substance comprises exogenous organic substances or exogenous metals or metal ions which NMR signals can be observed.

**6.** A method according to claim 5 wherein the exogenous substance is selected from the group consisting of: drugs for human and veterinary use, diagnostic and therapeutics agents, contrast agents for imaging techniques, radio-sensitizers for photodynamic and neutron capture therapy, pesticides, herbicides, fertilizers, food additives, preservatives, cosmetics, colorants, waste products, pollutants, and chemicals.

**7.** A method according to claim 1 wherein the endogenous substance comprises any substance resulting from normal or pathological biochemical processes of cells and tissues.

**8.** A method according to claim 7 wherein the endogenous substance is selected from the group consisting of natural carbohydrates, urea, lactate, citrate, acetate, carbonate, malonate, choline, creatine, phosphate, piruvate and natural amino acids.

**9.** A method according to any previous claim wherein the SA is selected from compounds containing a metal ion of the lanthanide group including: $Ce^{3+}$; $Pr^{3+}$; $Nd^{3+}$; $Pm^{3+}$; $Sm^{3+}$; $Eu^{3+}$; $Tb^{3+}$; $Dy^{3+}$; $Ho^{3+}$; $Er^{3+}$; $Tm^{3+}$; and $Yb^{3+}$.

**10.** A method according to claim 9 wherein the SA comprises lanthanide complexes of ligands selected from: EDTA (ethylenediaminetetracetic acid); PCTA (3,6,9,15-tetraazabicyclo-[9.3.1]-pentadeca-1(15)11,13-triene-3,6,9-tris (methane phosphonic) acid); BOPTA ((4RS)-[4-carboxy-5,8,11-tris (carboxymethyl)-1-phenyl-2-oxa-5,8,11-triazatridecan-13-oic acid]) or derivatives thereof; DTPA (diethylenetriamine pentaacetic acid) or derivatives thereof; DOTA (1,4,7,10-tetraazocyclo-dodecane-N,N',N",N"-tetraacetic acid) or derivatives thereof; DO3A (1,4,7,10-tetra azacyclododecane-1,4,7-triacetic acid) or derivatives thereof; DOTP (1,4,7,10-tetraazacyclododecane-1,4,7,10-tetrakis (methane phosphonic) acid or derivatives thereof; and ([3β(R),5β,12α]-5-[[4-[bis[2-bis(carboxymethyl)amino]-4-carboxy-1-oxobutyl]amino]-12-hydroxycholan-24-oic acid).

**11.** A method according to any previous claim wherein the cell sample is selected from human or animal cells, cells cultures, tissues and organ cells, vegetal cells, part of trunks, leaves and food cells of both animal or vegetal origin.

**12.** The method of claim 1 for use in the fields of medicine, diagnostics, photodynamic and neutron capture therapy, pharmacology and pharmacokinetics, toxicology, cosmetics, food preservation, and botanics.

**13.** Use of the method according to any one of the preceding claims for the determination of the kinetic parameters of cellular uptake.

**Patentansprüche**

1. Verfahren zur *in vitro*-Bestimmung der zellulären Aufnahme von exogenen oder endogenen Substanzen in einer Zellprobe, bei dem

   1) man eine geeignete Kombination aus Verschiebungsmittel (SA) und Kern für die Messung der zellulären Aufnahme der zu untersuchenden exogenen oder endogenen Substanz mittels MAS-NMR-Spektroskopie wählt,
   2) man das Zellkompartiment/die Zellkompartimente (CC bzw. CCs), in dem bzw. denen sich die exogene oder endogene Substanz verteilt, mittels MAS-NMR-Spektroskopie bestimmt, wobei man die Bestimmung durchführt durch:
   2a) Erfassen des MAS-NMR-Spektrums der in vitro-Probe, welche die zu untersuchende exogene oder endogene Substanz enthält, und Bestimmen des Marker$^{EXPO}$- oder Marker$^{ENDO}$-Signals bzw. der Marker$^{EXO}$- oder Marker$^{ENDO}$-Signale,
   2b) Hinzufügen einer geeigneten Menge des gewählten SAs zu der obigen in vitro-Probe, um so eine signifikante Lanthanid-induzierte Verschiebung (LIS) des Marker$^{EXO}$- Oder Marker$^{ENDO}$-Signals bzw. der Marker$^{EXO}$- oder der Marker$^{ENDO}$-Signale zu induzieren, und erneutes Erfassen des gleichen MAS-NMR-Spektrums, und
   2c) Vergleichen des Marker$^{EXO}$- oder Marker$^{ENDO}$-Signals bzw. der Marker$^{EXO}$- oder der Marker$^{ENDO}$-Signale der Stufen (2a) und (2b) und Bestimmen, in welchem Zellkompartiment die exogene oder endogene Substanz vorhanden ist, und
   3) Messen der Konzentration der exogenen oder endogenen Substanz in dem Kompartiment.

2. Verfahren nach Anspruch 1, bei dem Stufe 1) durchgeführt wird, indem:

   1a) man einen Satz möglicher SA-Kandidaten für die Kombination aus SA und Kern auf Grundlage der LIS identifiziert, die an mindestens einem NMR-Signal bewirkt wird, das zu der exogenen oder endogenen Substanz gehört,
   1b) man einen Satz möglicher Kandidaten für das SA auf Grundlage des CC bzw. der CCs identifiziert, in dem bzw. denen sie sich verteilen, und
   1c) man die Kombination aus SA und Kern auf Grundlage der in den Stufen (1a) und (1b) gewonnenen Informationen auswählt.

3. Verfahren nach Anspruch 1 zur in vitro-Bestimmung der zellulären Aufnahme von exogenen Substanzen.

4. Verfahren nach Anspruch 3, bei dem die exogene Substanz eine beliebige Substanz ist, die in einer biologischen Probe nicht natürlicherweise vorkommt.

5. Verfahren nach Anspruch 4, bei dem die exogene Substanz exogene organische Substanzen oder exogene Metalle oder Metallionen beinhaltet, deren NMR-Signale untersucht werden können.

6. Verfahren nach Anspruch 5, bei dem die exogene Substanz ausgewählt ist aus der Gruppe bestehend aus Arzneimitteln für die Verwendung am Menschen oder am Tier, Diagnostika und Therapeutika, Kontrastmitteln für Bildgebungstechniken, Strahlungssensibilisatoren für die photodynamische und Neutroneneinfangtherapie, Pestiziden, Herbiziden, Düngemitteln, Lebensmittelzusatzstoffen, Konservierungsmitteln, Kosmetika, Färbungsmitteln, Abfallprodukten, Schadstoffen und Chemikalien.

7. Verfahren nach Anspruch 1, bei dem die endogene Substanz eine beliebige Substanz beinhaltet, die aus normalen oder pathologischen biochemischen Prozessen von Zellen und Geweben resultiert.

8. Verfahren nach Anspruch 7, bei dem die endogene Substanz ausgewählt ist aus der Gruppe bestehend aus natürlichen Kohlenhydraten, Harnstoff, Laktat, Citrat, Acetat, Carbonat, Malonat, Cholin, Kreatin, Phosphat, Pyruvat und natürlichen Aminosäuren.

9. Verfahren nach einem der vorhergehenden Ansprüche, bei dem das SA ausgewählt ist aus Verbindungen, die ein Metallion der Lanthanidgruppe enthalten, einschließlich $Ce^{3+}$, $Pr^{3+}$, $Nd^{3+}$, $Pm^{3+}$, $Sm^{3+}$, $Eu^{3+}$, $Tb^{3+}$, $Dy^{3+}$, $Ho^{3+}$, $Er^{3+}$, $Tm^{3+}$ und $Yb^{3+}$.

10. Verfahren nach Anspruch 9, bei dem das SA Lanthanidkomplexe von Liganden ausgewählt aus EDTA (Ethylendiamintetraessigsäure), PCTA (3,6,9,15-Tetraazabicyclo-[9.3.1]-pentadeca-1(15)11,13-trien-3,6,9-tris(methanphosphon)säure), BOPTA ((4RS)-[4-Carboxy-5,8,11-tris(carboxymethyl)-1-phenyl-2-oxa-5,8,11-triazatridecan-13-säure]) oder Derivaten davon, DTPA (Diethylentriaminpentaessigsäure) oder Derivaten davon, DOTA (1,4,7,10-Tetraazocyclo-dodecan-N,N',N'',N''''-tetraessigsäure) oder Derivaten davon, DO3A (1,4,7,10-Tetraazacyclododecan-1,4,7-triessigsäure) oder Derivaten davon, DOTP (1,4,7,10-Tetraazacyclododecan-1,4,7,10-tetrakis(methanphosphon)säure oder Derivaten davon und ([3β(R),5β,12α]-3-[[4-[Bis[2-bis(carboxymethyl)amino]ethyl]amino]-4-carboxy-1-oxobutyl]amino]-12-hydroxycholan-24-säure) enthält.

11. Verfahren nach einem der vorhergehenden Ansprüche, bei dem die Zellprobe ausgewählt ist aus menschlichen oder tierischen Zellen, Zellkulturen, Geweben und Organzellen, Pflanzenzellen, Teilen von Stämmen, Blättern und Futterzellen sowohl tierischer als auch pflanzlicher Herkunft.

12. Verfahren nach Anspruch 1 zur Verwendung in den Gebieten der Medizin, Diagnostik, photodynamischen und Neutroneneinfangtherapie, Pharmakologie und Pharmakokinetik, Toxikologie, Kosmetik, Lebensmittelkonservierung und Botanik.

13. Verfahren des Verfahrens gemäß einem der vorhergehenden Ansprüche zur Bestimmung der kinetischen Parameter der zellulären Aufnahme.

**Revendications**

1. Procédé permettant de déterminer *in vitro* l'absorption cellulaire de substances exogènes ou endogènes dans un échantillon de cellules, lequel procédé comporte les étapes suivantes :

    1) choisir une combinaison d'agent de déplacement (AD) et de noyau appropriée pour la mesure, par spectroscopie de RMN-RAM (rotation à l'angle magique), de l'absorption cellulaire de la substance exogène ou endogène étudiée ;
    2) déterminer, par spectroscopie de RMN-RAM, le ou les compartiment(s) cellulaire(s) (CC) dans lequel ou lesquels ladite substance exogène ou endogène se répartit,
    cette détermination étant effectuée au moyen des opérations suivantes :

        2a) acquérir le spectre de RMN-RAM de l'échantillon *in vitro* contenant la substance exogène ou endogène étudiée et déterminer le signal ou les signaux marqueur(s)$^{EXO}$ ou marqueur(s)$^{ENDO}$,
        2b) ajouter en une quantité appropriée l'agent de déplacement choisi à l'échantillon *in vitro* mentionné ci-dessus, de manière à provoquer un déplacement DIL (déplacement induit par lanthanide) significatif du signal ou des signaux marqueur(s)$^{EXO}$ ou marqueur(s)$^{ENDO}$, et acquérir de nouveau le spectre de RMN-RAM de cet échantillon,
        2c) et comparer les signaux marqueurs ou marqueurs$^{ENDO}$ obtenus dans les étapes (2a) et (2b) et déterminer dans quel compartiment cellulaire se trouve la substance exogène ou endogène ;

    3) et mesurer la concentration de ladite substance exogène ou endogène dans ce compartiment.

2. Procédé conforme à la revendication 1, dans lequel on réalise l'étape 1) en effectuant les opérations suivantes :

    1a) identifier un jeu de candidats agents AD possibles pour ladite combinaison d'agent de déplacement et de noyau, en se basant sur les déplacements DIL produits sur au moins un signal RMN appartenant à ladite substance exogène ou endogène,
    1b) identifier un jeu de candidats possibles pour ledit agent AD, en se basant sur le ou les compartiment(s) cellulaire(s) dans lequel ou lesquels ils se répartissent,
    1c) et choisir ladite combinaison d'agent AD et de noyau, en se basant sur les informations réunies au cours des opérations (1a) et (1b).

3. Procédé, conforme à la revendication 1, de détermination *in vitro* de l'absorption cellulaire de substances exogènes.

4. Procédé conforme à la revendication 3, dans lequel la substance exogène est une substance quelconque qui ne se trouve pas naturellement dans un échantillon biologique.

5. Procédé conforme à la revendication 4, dans lequel la substance exogène comprend des substances organiques exogènes ou des métaux ou ions métalliques exogènes dont on peut observer des signaux RMN.

6. Procédé conforme à la revendication 5, dans lequel la substance exogène est choisie dans l'ensemble formé par les suivantes : médicaments à usage humain ou vétérinaire, agents de diagnostic et de thérapie, agents de contraste pour techniques d'imagerie, radiosensibilisateurs pour thérapie photodynamique et thérapie par capture de neutrons, pesticides, herbicides, agents fertilisants, adjuvants alimentaires, conservateurs, cosmétiques, colo-rants, déchets, polluants, et produits chimiques.

7. Procédé conforme à la revendication 1, dans lequel la substance endogène englobe une substance quelconque qui résulte des processus biochimiques normaux ou pathologiques se déroulant au sein des cellules ou des tissus.

8. Procédé conforme à la revendication 7, dans lequel la substance endogène est choisie dans l'ensemble formé par les suivantes : glucides naturels, urée, lactate, citrate, acétate, carbonate, malonate, choline, créatine, phosphate, pyruvate, et acides aminés naturels.

9. Procédé conforme à l'une des revendications précédentes, dans lequel l'agent AD est choisi parmi les composés contenant un ion d'un métal de la série des lanthanides, y compris les ions suivants : $Ce^{3+}$, $Pr^{3+}$, $Nd^{3+}$, $Pm^{3+}$, $Sm^{3+}$, $Eu^{3+}$, $Tb^{3+}$, $Dy^{3+}$, $Ho^{3+}$, $Er^{3+}$, $Tm^{3+}$, et $Yb^{3+}$.

10. Procédé conforme à la revendication 9, dans lequel l'agent AD englobe les complexes de lanthanides et de ligands choisis parmi les suivants : EDTA ou acide éthylènediamine-tétraacétique, PCTA ou acide 3,6,9,15-tétraaza-bicyclo [9.3.1]pentadéca-1(15),11,13-triène-3,6,9-tris(méthane-phosphonique), BOPTA ou acide (4RS)-4-carboxy-5,8,11-tris(carboxy-méthyl)-1-phényl-2-oxa-5,8,11-triaza-tridécane-13-oïque, ainsi que ses dérivés, DTPA ou acide diéthylènetriamine-pentaacétique, ainsi que ses dérivés, DOTA ou acide 1,4,7,10-tétraaza-cyclododécane-N,N',N'', N'''-tétraacétique, ainsi que ses dérivés, DO3A ou acide 1,4,7,10-tétraaza-cyclododécane-1,4,7-triacétique, ainsi que ses dérivés, DOTP ou acide 1,4,7,10-tétraaza-cyclododécane-1,4,7,10-tétrakis(méthane-phosphonique), ainsi que ses dérivés, et acide {[3β(R),5β,12α]-3-[(4-{bis[2-bis(carboxy-méthyl)-amino-éthyl]amino}-4-carboxy-1-oxo-butyl)amino]-12-hydroxy-cholane-24-oïque.

11. Procédé conforme à l'une des revendications précédentes, dans lequel l'échantillon de cellules est choisi parmi des cellules, cultures cellulaires, cellules d'organes et tissus humains ou animaux, des cellules végétales, des morceaux de tronc, des feuilles, et des cellules d'aliments d'origine végétale ou animale.

12. Procédé conforme à la revendication 1, conçu pour être utilisé dans les domaines de la médecine, de la réalisation de diagnostics, de la thérapie photodynamique ou de la thérapie par capture de neutrons, de la pharmacologie et de la pharmacocinétique, de la toxicologie, de la cosmétique, de la conservation des aliments, et de la botanique.

13. Utilisation d'un procédé conforme à l'une des revendications précédentes, pour la détermination de paramètres cinétiques d'absorption cellulaire.

Figure 1

Figure 2

Figure 3

Figure 4

Figure 5

Figure 6

Figure 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **Zaplatin N. ; Baker K. A. ; Kleinhans. F. W.** Effectiveness and Toxicity of Several DTPA Broadening gents for Biological ESR Spectroscopy. *J. Magn. Res. Ser. B,* 1996, vol. 110, 249-254
- **Calabi L. ; Alfieri G. ; Biondi L. ; De Miranda M. ; Paleari L. ; Ghelli S.** Application of high resolution magic angle spinning NMR spectroscopy to define the cell up-taking of MRI Contrast Agents. *J. Magn. Reson.,* 2002, vol. 156, 222-229
- **Calabi L. ; Paleari L. ; Biondi L. ; Linati L. ; De Miranda M. ; Ghelli S.** Application of H and Na Magic Angle Spinning NMR Spectroscopy to define the HRBC up-taking of MRI contrast agents. *J. Magn. Reson.,* 2003, vol. 164, 28-34
- **Artemov D ; Solaiyappan M ; Bhujwalla ZM.** Magnetic resonance pharmacoangiography to detect and predict chemotherapy delivery to solid tumors. *Cancer Res,* 2001, vol. 61 (7), 3039-44
- **Colet J. M. ; Vander Elst L ; Muller RN.** Dynamic evaluation of the hepatic uptake and clearance of manganese-based MRI contrast agents: a 31P NMR study on the isolated and perfused rat liver. *J Magn. Reson. Imaging,* 1998, vol. 8 (3), 663-9
- A combined confocal and spectroscopic TPE architecture for the identification of single fluorescent molecules. **Chirico G. ; Cannone F. ; Olivini F. ; Beretta S. ; Baldini G. ; Diaspro A. ; Robello M.** SPIE proc., Multiphoton Microscopy in the Biomedical Sciences. 2001, vol. 4262, 407-413
- **Chirico G. ; Cannone F. ; Beretta S. ; Baldini G. ; Diaspro A.** Single Molecules Studies By Means Of The Two-Photon Fluorescence Distribution. *Microsc.Res.Tech.,* 2001, vol. 55, 359-364
- **Degani H. ; Elgavish G. A.** Ionic Permeabilities of Membranes. *FEBS Lett.,* 1978, vol. 90 (2), 357-360
- **Gupta R. K. ; Gupta P.** Direct Observation of Resolved Resonances from Intra- and Extracellular Sodium-23 Ions in NMR Studies of Intact Cells and Tissues Using Dysprosium(III)tripoly phosphate as Paramagnetic Shift Reagent. *J. Magn. Reson.,* 1982, vol. 47, 344-350
- **Miller S. K. ; Chu W. J. ; Pohost G. M. ; Elgavish G. A.** Improvement of Spectral Resolution in Shift-Reagent-Aided 23Na NMR Spectroscopy in the Isolated Perfused Rat Heart System. *Magn. Reson. Med.,* 1991, vol. 20, 184-195
- **Aime S ; Botta M ; Mainero V ; Terreno E.** Separation of intra- and extracellular lactate NMR signals using a lanthanide shift reagent. *Magn Reason Med,* 2002, vol. 47, 1 10-3
- **Humpfer E. ; Spraul M. ; Nicholson A. W. ; Nicholson J. K. ; Lindon J. C.** Direct Observation of Resolved intra- and extracellular Water Signals in Intact Human Red Blood Cells Using 1H MAS NMR Spectroscopy. *Magn. Res. Med.,* 1997, vol. 38, 334-336
- Physicochemical Principles Influencing Magnetopharmaceuticals. **Springer C. S. Jr.** NMR in Physiology and Biomedicine. Academic Press Inc, 1994, 75-99
- **Live D. H. ; Chan S. I.** Bulk Susceptibility Corrections in Nuclear Magnetic Resonance Experiment Using Superconducting Solenois. *Anal. Chem.,* 1970, vol. 42 (7), 791-792
- **Pályka, W. Huang ; C. S. Springer Jr.** The Effects of Bulk Magnetic Susceptibility in NMR. *Bull. Magn. Reson.,* 1995, vol. 17, 46-53
- **Shachar-Hill Y. ; Berfroy D. E. ; Pfeffer P. E. ; Ratcliffe R. G.** Using Bulk Magnetic Susceptibility to Resolve Internal and External Signals in the NMR Spectra of Plant Tissues. *J. Magn. Reson.,* 1997, vol. 127, 17-25